(19) Europäisches Patentamt
European Patent Office
Office européen des brevets

(11) **EP 3 394 978 B1**

(12) **FASCICULE DE BREVET EUROPEEN**

(45) Date de publication et mention de la délivrance du brevet:
**14.10.2020 Bulletin 2020/42**

(21) Numéro de dépôt: **16826040.4**

(22) Date de dépôt: **22.12.2016**

(51) Int Cl.:
*H02P 6/08* *(2016.01)*    *H02P 23/00* *(2016.01)*

(86) Numéro de dépôt international:
**PCT/EP2016/082285**

(87) Numéro de publication internationale:
**WO 2017/109022 (29.06.2017 Gazette 2017/26)**

(54) **PROCÉDÉ DE COMMANDE PSEUDO-SINUSOÏDALE D'UN MOTEUR ÉLECTRIQUE SYNCHRONE**

PSEUDOSINUSOIDALES STEUERUNGSVERFAHREN ZUR STEUERUNG EINES ELEKTRISCHEN SYNCHRONMOTORS

PSEUDO-SINUSOIDAL CONTROL METHOD FOR CONTROLLING A SYNCHRONOUS ELECTRIC MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2015 FR 1563170**

(43) Date de publication de la demande:
**31.10.2018 Bulletin 2018/44**

(73) Titulaire: **SOMFY ACTIVITES SA**
**74300 Cluses (FR)**

(72) Inventeur: **BRUNO, Serge**
**74460 Marnaz (FR)**

(74) Mandataire: **Lavoix**
**62, rue de Bonnel**
**69448 Lyon Cedex 03 (FR)**

(56) Documents cités:
**WO-A2-2007/016235    GB-A- 2 291 286**
**US-A- 5 804 939    US-A1- 2004 056 632**

**Description**

L'invention concerne un procédé de commande pseudo-sinusoïdale d'un moteur électrique synchrone.

L'invention concerne plus particulièrement les moteurs électriques synchrones sans balais à commutation électronique, appelés également « BLDC » pour « Brushless Direct Current » en langue anglaise. De façon connue, on peut piloter un moteur BLDC avec un courant de commande de forme sinusoïdale. Afin d'assurer un bon fonctionnement du moteur, la forme du courant de commande est calculée en fonction de la position du rotor du moteur. Par exemple, un courant de commande de forme sinusoïdale est généré en fonction d'une position du rotor mesurée par des capteurs de position et/ou en fonction d'une mesure, en temps réel, du courant qui circule dans les bobines d'excitation du moteur. Cependant, le calcul d'un courant de commande sinusoïdal en fonction de ces informations en temps réel, quelle que soit la vitesse ou le couple résistant exercé sur le moteur, nécessite des ressources de calcul importantes. Par exemple, il est nécessaire de mettre en œuvre des transformations mathématiques complexes, tel que la transformation dite de Park et Clarke. Typiquement, cela nécessite un processeur dédié de traitement du signal, dit DSP, acronyme pour « Digital Signal Processor » en anglais. Cela a pour inconvénient d'augmenter le coût et la complexité de fabrication du système de commande du moteur.

De façon connue, on peut également piloter un tel moteur avec un courant électrique d'alimentation périodique présentant une forme trapézoïdale. Un tel courant est alors plus facile à calculer et ne nécessite pas d'utiliser un processeur dédié de traitement du signal. Un tel procédé de commande est par exemple décrit dans la demande de brevet US 20040056632 A1. Ce procédé a cependant pour désavantage que le moteur génère un bruit élevé lors de son fonctionnement. Ceci est notamment dû au fait que la forme trapézoïdale du courant de commande provoque des inversions brutales du courant d'alimentation qui circule dans les bobines du moteur lors de son fonctionnement.

US 5 804 939 divulgue aussi un tel procédé de commande.

C'est à ces inconvénients qu'entend plus particulièrement remédier l'invention en proposant un procédé de commande pseudo-sinusoïdale d'un moteur électrique synchrone dont la mise en œuvre peut être assurée avec des ressources informatiques réduites et qui limite le niveau du bruit acoustique généré par le moteur lors de son fonctionnement.

A cet effet, l'invention concerne un procédé de commande pseudo-sinusoïdale d'un moteur électrique synchrone, ce procédé comportant des étapes de :

a) génération de trois signaux de commande comportant chacun une pluralité d'impulsions,
b) génération de courants électriques d'alimentation pour alimenter un moteur électrique synchrone, chacun alimentant un enroulement du moteur et étant générée par modulation de largeur d'impulsion à partir de celui des signaux de commande qui est associé à cet enroulement.

Lors de l'étape a), les trois signaux de commande sont générés pour des plages de commande successives, chaque plage de commande étant associée à un intervalle prédéfini de positions angulaires d'un rotor du moteur. Les impulsions des signaux de commande générés lors de l'étape a) présentent une durée qui varie pendant les plages de commande successives, telles que, pour chacune des plages de commande, les valeurs des rapports cycliques de modulation respectifs de premier et deuxième signaux de commande choisis pour cette plage de commande parmi les trois signaux de commande générés varient inversement l'un par rapport à l'autre, le troisième signal de commande présentant un rapport cyclique de modulation de valeur constante, le rapport cyclique de modulation d'un signal de commande étant défini comme étant égal à la durée d'une impulsion du signal de commande divisée par la période de commande de ce signal de commande.

Grâce à l'invention, en modulant les rapports cycliques de modulation des différents signaux de commande, on obtient un courant d'alimentation qui présente une forme pseudo-sinusoïdale, et suffisamment proche d'une forme sinusoïdale pour assurer un bon fonctionnement du moteur. Ce courant peut être obtenu avec des ressources de calcul réduites, sans qu'il ne soit nécessaire d'utiliser un processeur dédié pour des fonctions de traitement du signal. De plus, la forme pseudo-sinusoïdale permet, par rapport à une forme trapézoïdale, d'éviter que le bruit généré par le moteur lors de son fonctionnement ne présente un niveau trop élevé. De plus, avec des ressources similaires à celles d'une commande sinusoïdales, on améliore le rendement, notamment pour des actionneurs fournissant un couple élevé, c'est-à-dire supérieur à 20Nm, ou des actionneurs autonomes très basse tension (12V).

Selon des aspects avantageux mais non obligatoires de l'invention, un tel système peut incorporer une ou plusieurs des caractéristiques suivantes, prises dans toute combinaison techniquement admissible :

- l'étape a) comporte l'acquisition d'une valeur de référence du rapport cyclique de modulation, qui est définie en fonction d'une vitesse de consigne de rotation du moteur prédéfinie ;
- lors de l'étape a) les signaux de commande sont générés en fonction de la valeur de référence acquise.
- La valeur de référence acquise du rapport cyclique de modulation est générée par un régulateur de vitesse du moteur, programmé pour maintenir la vitesse de rotation du moteur à la vitesse de consigne de rotation prédéfinie.
- Pour chacune des plages de commande, les valeurs des rapports cycliques de modulation sont comprises entre les valeurs DC et 1-DC, où DC est la valeur de référence acquise.
- Pendant chacune des plages de commande, les valeurs des rapports cycliques de modulation des premier et deuxième signaux de commande varient linéairement en fonction du temps.
- Pendant chacune des plages de commande, les valeurs des rapports cycliques de modulation des premier et deuxième signaux de commande varient proportionnellement et inversement l'un par rapport à l'autre, avec une pente égale à $\frac{DCmax-DCmin}{n-1}$ en valeur absolue, où :

- $DC_{max}$ et $DC_{min}$ sont, respectivement, les valeurs maximale et minimale entre lesquelles varient les valeurs des rapports cycliques de modulation des premier et deuxième signaux de commande,
- n est un nombre entier égal au nombre de périodes du signal de commande pendant la durée de la plage de commande ou des plages de commande pendant lesquelles les valeurs des rapports cycliques de modulation des premier et deuxième signaux de commande sont essentiellement continuellement croissantes ou décroissantes.

- L'étape a) comporte, pendant une plage de commande, dite plage courante :
- le calcul d'une séquence de commande des valeurs des rapports cycliques de modulation pour au moins la plage de commande suivante,
- la mesure d'une position angulaire du rotor du moteur,
- la génération des signaux de commande pour la plage de commande suivante en fonction de la séquence de commande calculée, cette génération étant déclenchée dès que la position mesurée du rotor appartient à l'intervalle prédéfini de positions angulaires associé à la plage de commande suivante.
- L'étape a) comporte, la génération des signaux de commande avec des valeurs de rapports cycliques de modulation constantes égales, pour chaque signal de commande, à la valeur du rapport cyclique de modulation de ce signal de commande à la fin de la plage de commande courante, uniquement si à l'issue de la plage de commande courante la position mesurée du rotor n'appartient pas encore à l'intervalle associé à la plage de commande suivante, la génération des signaux de commande pour la plage de commande suivante en fonction de la séquence de commande calculée n'étant alors déclenchée que lorsque la position mesurée du rotor appartient à l'intervalle prédéfini associé à cette plage de commande suivante.

L'invention concerne également une unité de commande pseudo-sinusoïdale d'un moteur électrique synchrone, programmée pour :

a) générer trois signaux de commande comportant chacun une pluralité d'impulsions,
b) générer des courants électriques d'alimentation pour alimenter un moteur électrique synchrone, chacun alimentant un enroulement du moteur et étant générée par modulation de largeur d'impulsion à partir de celui des signaux de commande qui est associé à cet enroulement.

L'unité de commande est configurée pour que les impulsions des signaux de commande générés lors de l'étape a) présentent une durée qui varie pendant les plages de commande successives, telles que, pour chacune des plages de commande, les valeurs des rapports cycliques de modulation respectifs de premier et deuxième signaux de commande choisis pour cette plage de commande parmi les trois signaux de commande générés varient inversement l'un par rapport à l'autre, le troisième signal de commande présentant un rapport cyclique de modulation de valeur constante, le rapport cyclique de modulation d'un signal de commande étant défini comme étant égal à la durée d'une impulsion du signal de commande divisée par la période de ce signal de commande.
L'invention sera mieux comprise et d'autres avantages de celle-ci apparaîtront plus clairement à la lumière de la description qui va suivre, d'un mode de réalisation d'un procédé de commande donné uniquement à titre d'exemple et faite en référence aux dessins annexés dans lesquels :

- la figure 1 est une représentation schématique de principe d'un actionneur comportant un moteur électrique synchrone ;
- la figure 2 est une représentation schématique d'un rotor du moteur de la figure 1 ;
- la figure 3 représente schématiquement un exemple de signaux issus de capteurs de position angulaire du moteur de la figure 1,
- la figure 4 représente schématiquement un exemple de variation du rapport cyclique de modulation d'un signal de commande du moteur de la figure 1 ;

- la figure 5 représente schématiquement, l'évolution de signaux de commande du moteur de la figure 1 pendant une partie d'une période de fonctionnement de ce moteur ;
- la figure 6 représente schématiquement l'évolution de la valeur des rapports cycliques de modulation des différents signaux de commande lors du fonctionnement du moteur pour un sens de rotation donné ;
- la figure 7 représente schématiquement un courant d'alimentation triphasé généré à l'aide des signaux de commande de la figure 5 ;
- la figure 8 représente un ordinogramme d'un procédé de commande conforme à l'invention.

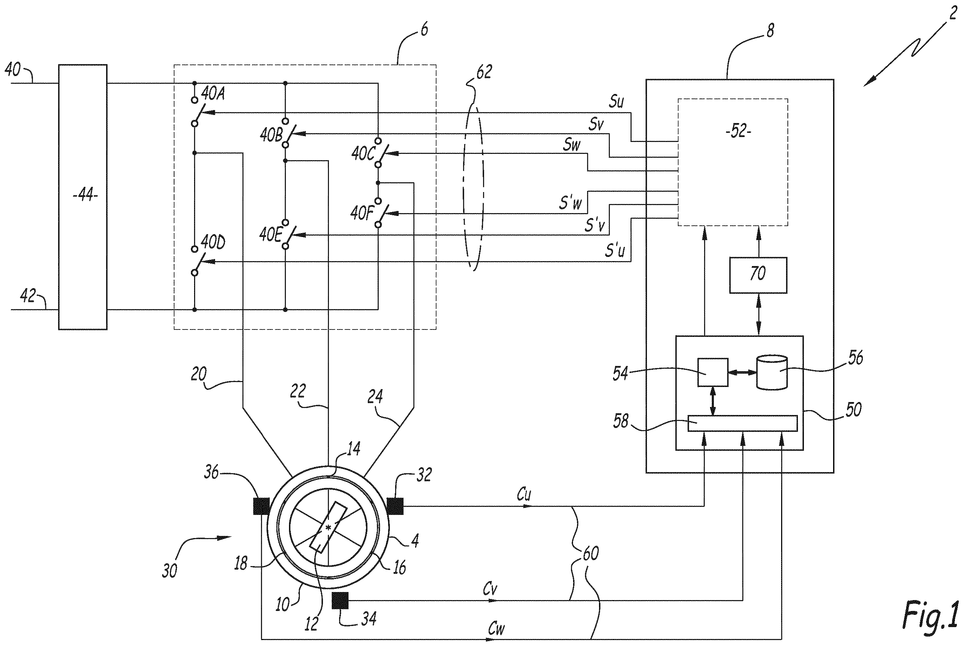

La figure 1 décrit un actionneur 2 commandable qui comporte un moteur électrique synchrone 4, un convertisseur de puissance 6 et une unité de commande 8.

Le moteur 4 est ici un moteur électrique synchrone de technologie sans balai à commutation électronique, également connu sous l'acronyme « BLDC » ou sous le terme en langue anglaise « Brushless Direct Current ». Par exemple, le moteur 4 est le moteur électrique commercialisé par la société SOMFY SAS sous la référence « RS100 ». De façon connue, le moteur 4 comporte un stator 10 et un rotor 12 qui est mobile en rotation par rapport au stator 10 autour d'un axe de rotation 12A. Le moteur 4 est configuré pour être alimenté par un courant électrique périodique triphasé, ici au moyen de trois fils de connexion 20, 22 et 24. Ce courant électrique triphasé comporte trois courants électriques distincts dits courants d'alimentation I qui sont en déphasage de 120° les uns par rapport aux autres et qui circulent dans les fils de connexion 20, 22 et 24. Dans ce qui suit, ces trois courants d'alimentation I sont identiques, mis à part leur déphasage. Aussi, seul l'un de ces courants d'alimentation I est décrit en détail. Le rotor 12 est relié mécaniquement à un arbre de sortie de l'actionneur 2 pour entraîner en rotation une charge mécanique, non représentée sur la figure 1.

Par exemple, le stator 10 comporte un empilement de tôles ferromagnétiques qui définit un circuit magnétique, et des enroulements 14, 16 et 18, ou bobines d'excitation, formant respectivement des phases U, V, W du moteur 4. Les enroulements 14, 16 et 18 sont respectivement raccordés aux fils 20, 22 et 24 pour chacun recevoir un courant électrique d'alimentation.

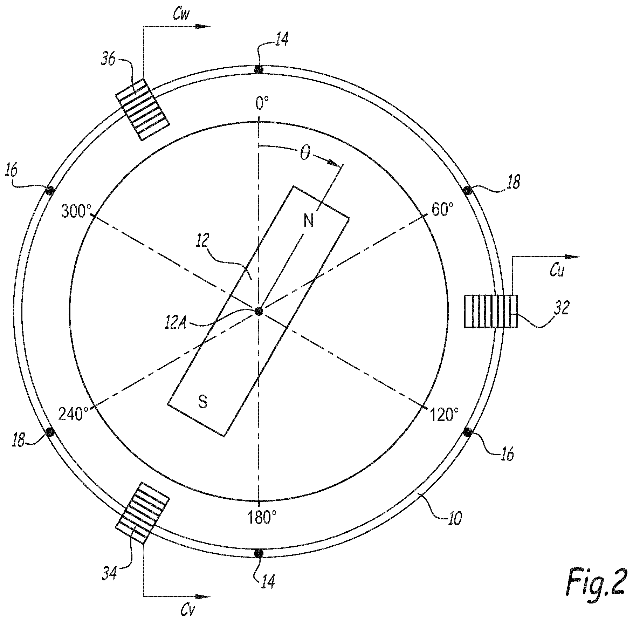

Dans cet exemple, le rotor 12 est un rotor à aimant permanent qui comporte ici deux pôles magnétiques opposés, notés N et S sur la figure 2 pour, respectivement, Nord et Sud. De cette manière, la période de rotation du rotor 10 correspond à une période du courant d'alimentation I. La période du courant d'alimentation I est nommée période électrique $T_\theta$. Par exemple, cette période électrique $T_\theta$ est égale à 100 millisecondes (ms).

En variante, le nombre de pôles du rotor 12 peut être différent. Dans ce cas, l'homme du métier sait que la période de rotation du rotor ne correspond plus à la période électrique $T_\theta$ du courant d'alimentation I. Par exemple, si le rotor 12 comporte quatre pôles magnétiques, une période de rotation du rotor 12 correspond à deux périodes électriques.

Le moteur 4 comporte ici un dispositif 30 de détermination d'une position angulaire du rotor 12. Ce dispositif 30 est configuré pour fournir à l'unité de commande 8 un signal représentatif de la position angulaire du rotor 12 par rapport au stator 10. La position angulaire est ici définie par rapport aux positions des enroulements 14, 16, 18 sur le stator 10 et exprimée sous la forme d'un angle $\theta$, dit angle électrique, qui peut prendre une valeur comprise dans l'intervalle [0°, 360°] modulo 360°. Ainsi, l'angle 360° correspond à l'angle 0°. La position d'origine de l'angle $\theta$ est ici choisie égale à 0°.

Ici, du fait que le rotor 12 comporte deux pôles magnétiques, l'angle électrique $\theta$ est égal à un angle mécanique défini entre le rotor 12 et le stator 10. Comme indiqué précédemment, lorsque le rotor 12 comporte un nombre de pôles magnétiques différent, l'angle électrique $\theta$ est égal à un multiple de 2 de l'angle mécanique. Par exemple, si le rotor 12 comporte quatre pôles magnétiques, l'angle électrique est le double de l'angle mécanique.

Dans cet exemple, le dispositif 30 comporte trois capteurs 32, 34, 36 de position du rotor 12. Ces capteurs 32, 34, 36 sont, par exemple, des capteurs magnétiques à effet Hall à sortie binaire. De façon connue, de tels capteurs sont configurés pour réagir aux flux magnétiques des aimants du rotor 12 et pour fournir chacun un signal représentatif de la position angulaire du rotor 12. Ces signaux sont notés respectivement $C_U$, $C_V$, $C_W$ dans ce qui suit. L'analyse des différents signaux fournis par ces capteurs 32, 34, 36 permet de déterminer la position et la vitesse du rotor 12. Ici, les capteurs 32, 34, 36 sont montés sur un circuit imprimé solidaire du stator 10.

La figure 2 représente plus en détail de la position des capteurs 32, 34, 36 autour du rotor 12. Par exemple, le capteur 32 délivre un signal logique « vrai » lorsque le pôle magnétique N du rotor 12 présente une position angulaire comprise dans l'intervalle [0°, 180°[ et délivre un signal logique « faux » lorsque cette position angulaire est comprise dans l'intervalle [180°, 360°[. Le capteur 32 est placé à une position angulaire de 90°, à 5% ou 10% près. Les positions angulaires ont pour origine l'enroulement 14. Les capteurs 34 et 36 sont placés avec un déphasage de 120° et sont ici respectivement associés aux enroulements 16 et 18.

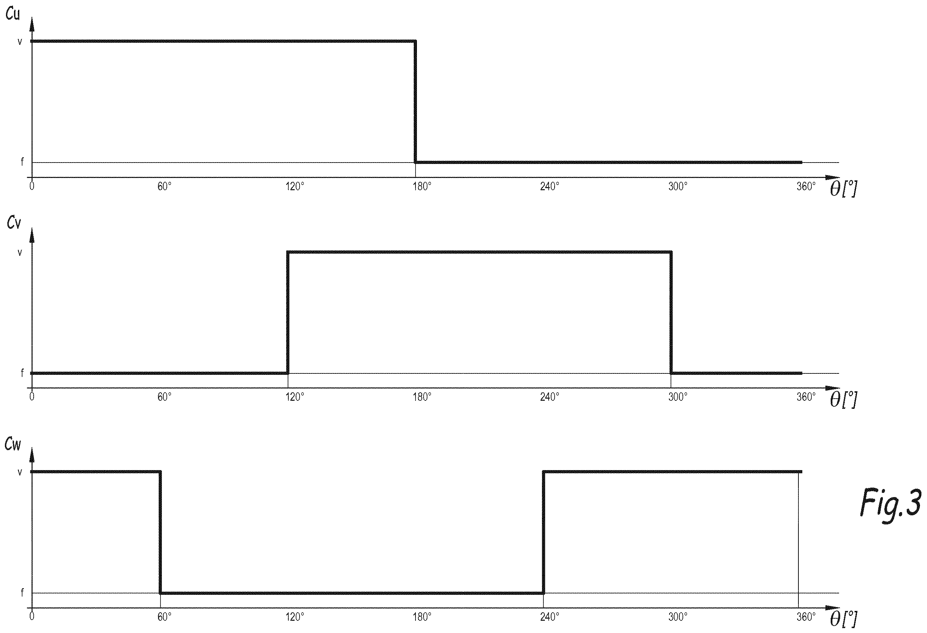

La figure 3 illustre l'évolution des signaux $C_U$, $C_V$, $C_W$ en fonction de la position angulaire. On note respectivement « V » et « f » les valeurs « vrai » et « faux » de ces signaux $C_U$, $C_V$, $C_W$.

En variante, un seul ou deux capteurs de position peuvent être utilisés. D'autres types de capteurs peuvent aussi être utilisés, comme des codeurs à roue. Selon une autre variante, les informations sur la position et/ou la vitesse de rotation du rotor 12 peuvent être déterminées indirectement, sans capteur de position, par exemple en mesurant la force contre-électromotrice générée par le moteur 4 au niveau d'un ou plusieurs des enroulements 14, 16, 18.

Le convertisseur de puissance 6 est configuré pour générer le courant d'alimentation I de façon à alimenter séquentiellement les enroulements 14, 16, 18 afin de créer un champ magnétique tournant par rapport au stator 10 pour entraîner en rotation le rotor 12. Plus précisément, le convertisseur 6 est configuré pour générer un courant d'alimentation I du moteur 4. Les fils 20, 22, 24 fournissent séquentiellement aux enroulements 14, 16, 18 le courant d'alimentation I de manière à créer le champ magnétique tournant par rapport au stator 10.

Dans cet exemple, le convertisseur 6 reçoit une tension d'alimentation de l'actionneur 2 fournie par une source d'énergie extérieure au moyen de fils de connexion 40, 42 électriquement conducteurs de l'actionneur 2. Par exemple, un réseau de distribution électrique fournit une tension électrique alternative, qui est redressée puis filtrée par un circuit d'alimentation 44, afin d'obtenir une tension continue, qui est alors fournie au convertisseur 6. Par exemple, on utilise une tension alternative de 230 volts pour obtenir une tension continue redressée d'environ 325 volts.

Le convertisseur 6 comporte une pluralité de commutateurs de puissance commandables, portant les références 40A à 40F. Ces commutateurs de puissance 40A à 40F sont par exemple des transistors bipolaires à grille isolée, connus sous l'acronyme IGBT. En variante, les commutateurs de puissance 40A à 40F sont des transistors à effet de champ de type MOSFET.

De façon connue en soi, les commutateurs de puissance 40A à 40F sont pilotés par des signaux de commande $S_u$, $S_v$, $S_w$ pour être ouverts et fermés séquentiellement. Dans cet exemple, les commutateurs de puissance 40A à 40F sont en outre pilotés par des signaux de commande additionnels $S'_u$, $S'_v$, $S'_w$ qui sont calculés directement à partir de signaux de commande $S_u$, $S_v$, $S_w$. Par exemple, les signaux de commande $S_u$, $S_v$, $S_w$ sont des signaux logiques, qui ne peuvent prendre qu'une valeur haute ou une valeur basse d'amplitude. Les systèmes de commande additionnels $S'_u$, $S'_v$, $S'_w$ sont ici les complémentaires logiques des signaux de commande, respectivement $S_u$, $S_v$, $S_w$. Aussi, seuls les signaux de commande $S_u$, $S_v$, $S_w$ sont décrits en détail dans ce qui suit. Les signaux de commande $S_u$, $S_v$, $S_w$ et les signaux complémentaires $S'_u$, $S'_v$, $S'_w$ sont ainsi fournis aux six commutateurs de puissance 40A à 40F ainsi que représenté sur la figure 1. Ceci permet de fournir alternativement, à partir de la tension continue qui est fournie au convertisseur 6, le courant d'alimentation I aux différents enroulements 14, 16, 18 par les fils de connexion 20, 22, 24.

L'unité de commande 8 est configurée pour, notamment, commander le convertisseur 6 de façon à faire fonctionner le moteur 4 pour entraîner la charge mécanique en rotation. L'unité 8 comporte un calculateur électronique 50 et un générateur 52 de signaux de commande $S_u$, $S_v$, $S_w$ du convertisseur 6. Les signaux de commande $S_u$, $S_v$, $S_w$ sont configurés pour commander le convertisseur 6 suivant une technique de modulation de largeur d'impulsion, connue sous l'acronyme « PWM » pour le terme anglais « Pulse Width Modulation ». Ces signaux de commande $S_u$, $S_v$, $S_w$ sont décrits plus en détail dans ce qui suit.

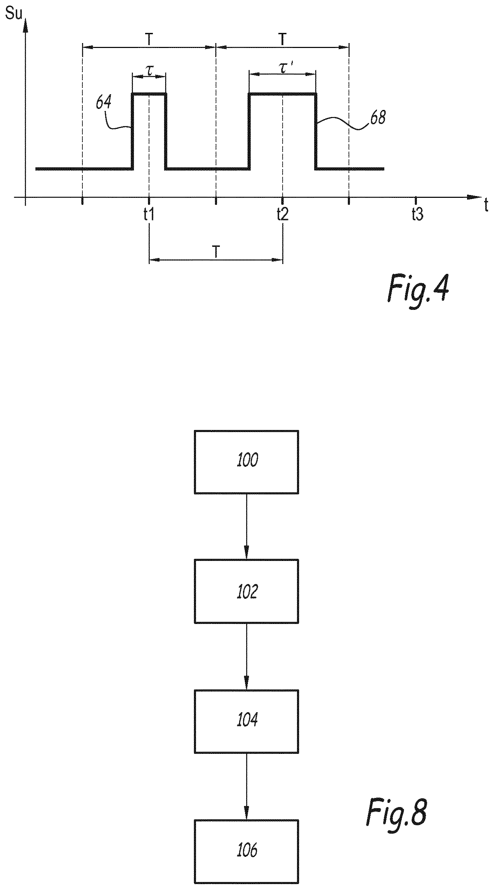

Le calculateur 50 comporte un module logique 54, tel qu'un microcontrôleur. Le calculateur 50 comporte en outre un module de stockage de données 56, par exemple une mémoire non volatile de technologie Flash ou EEPROM. Le calculateur 50 comporte en outre une interface de commande 58, par exemple raccordée au générateur 52 pour piloter ce générateur 52. Le module 56 contient notamment des instructions pour exécuter un procédé de commande pseudo-sinusoïdale du moteur 4 qui sera décrit en référence à la figure 8. Le calculateur 50 reçoit, sur son interface 58, les signaux représentatifs $C_U$, $C_V$ et $C_W$ de la position angulaire du rotor 12 fournis par le dispositif 30, ici au moyen de liaisons de données 60. Un microcontrôleur est suffisant pour exécuter les différentes fonctions associées à la génération des signaux de commande $S_u$, $S_v$, $S_w$ et gérer la logique liée aux ordres de commande fournis à l'actionneur 2. Ainsi, il n'est pas nécessaire d'avoir recours à un processeur de signal numérique, spécifique dit DSP, acronyme pour « Digital Signal Processor » en anglais, pour générer le courant d'alimentation. De façon connue, un tel processeur de signal numérique diffère d'un microcontrôleur en ce qu'il comporte une architecture matérielle et des jeux d'instructions spécifiques optimisés pour implémenter des fonctions mathématiques de traitement du signal, comme le calcul des fonctions trigonométriques.

Le générateur 52 est ici raccordé à des électrodes de commande respectives des commutateurs de puissance 40A à 40F par l'intermédiaire de liaisons filaires 62.

Chaque signal de commande $S_u$, $S_v$, $S_w$ comporte une pluralité d'impulsions qui présentent ici une même amplitude et qui sont émises périodiquement. Ces impulsions peuvent être de même durée ou présenter des durées variables au cours du temps, comme illustré à la figure 4.

Plus précisément, à la figure 4, on a représenté à titre d'illustration deux impulsions 64 et 68 du signal de commande $S_U$. On note T la période du signal de commande $S_U$. L'impulsion 64 présente une durée $\tau$. L'impulsion 68 présente une durée $\tau'$ différente de la durée $\tau$. On note $t_1$ l'instant correspondant au milieu de l'impulsion 64 et $t_2$ l'instant correspondant au milieu de l'impulsion 68. Les instants $t_1$ et $t_2$ sont séparés par la durée d'une période T. Le rapport cyclique de modulation du signal de commande $S_U$, est défini comme étant le rapport entre la durée $\tau$, $\tau'$ d'une impulsion de ce signal et la durée d'une période T. Le rapport cyclique de modulation et un nombre réel compris entre 0 et 1.

Comme on le voit ici, ce rapport cyclique de modulation peut varier au cours du temps lorsque les impulsions 64, 68 présentent une durée différente.

Ce qui est décrit en référence au signal de commande $S_U$, s'applique également aux signaux de commande $S_V$ et $S_W$. On note respectivement $R_U$, $R_V$, $R_W$ les rapports cycliques de modulation des signaux de commande $S_u$, $S_v$, $S_w$.

Dans cet exemple, les signaux de commande $S_u$, $S_v$, $S_w$ présentent une même fréquence et donc une même période T. De préférence, cette fréquence est supérieure ou égale à 10 kHz et inférieure ou égale à 40 kHz. Dans cet exemple, cette fréquence est choisie égale à 18 kHz.

La vitesse de rotation du rotor 12 peut être contrôlée en modifiant le rapport cyclique de modulation $R_U$, $R_V$, $R_W$ des signaux de commande $S_U$, $S_V$, $S_W$. A cet effet, l'unité 8 est configurée pour acquérir une valeur de référence DC de rapport cyclique de modulation. Cette valeur de référence DC est définie en fonction d'une vitesse de consigne de rotation du moteur 4. Typiquement, cette dernière est prédéfinie par un utilisateur de l'actionneur 2 au moyen d'une interface de sélection de vitesses ou est fonction d'un ordre de commande fourni par un automatisme, tel qu'un capteur de vent, de luminosité, de température ou une horloge. La valeur de référence DC est un nombre réel compris entre 0 et 1.

A cet effet, l'unité 8 comporte un module 70 de gestion de la vitesse de rotation du rotor 12.

Dans cet exemple, le module 70 comporte un régulateur de vitesse proportionnel de type proportionnel intégrateur dérivateur, noté PID ou proportionnel intégrateur, noté PI, configuré pour asservir la vitesse de rotation du rotor 12 à la vitesse de consigne de rotation prédéfinie en fonction d'une vitesse de rotation mesurée. Un seul régulateur de vitesse de type PI ou PID est nécessaire pour gérer cette commande pseudo-sinusoïdale, ce qui ne serait pas le cas si on souhaitait gérer une commande sinusoïdale. En effet, la régulation de vitesse est simple car basée sur la valeur de référence DC fournie au régulateur.

Par exemple, la vitesse de rotation du rotor 12 est automatiquement calculée par le calculateur 50, en fonction des données provenant du dispositif 30 relatives à la position du rotor 12 en temps réel.

L'unité 8 est plus particulièrement configurée pour générer le courant d'alimentation I de sorte à ce qu'il présente une forme pseudo-sinusoïdale, c'est-à-dire une fonction périodique qui se rapproche le plus possible d'une fonction sinusoïdale. Le courant d'alimentation I est ici généré par approximation pendant des plages de commande successives.

Dans cet exemple, la période électrique $T_\theta$ est subdivisée en une pluralité de plages de commande, chacune correspondant à un intervalle prédéfini de position angulaire du rotor 12. Dans cet exemple, on définit six plages de commande, notées $P_1$ à $P_6$, correspondant chacune à un intervalle continu de 60°. Ces plages sont numérotées consécutivement $P_1$ à $P_6$, en partant de la position angulaire position angulaire de référence, ici choisie égale à 0°. Par exemple, la plage de commande $P_1$ est associée à l'intervalle de positions angulaires [0°, 60°[. La plage de commande $P_2$ est associée à l'intervalle de positions angulaires [60°, 120°[. De même, la plage de commande $P_6$ est associée à l'intervalle de positions angulaires [300°, 0°[. La durée de chaque plage de commande est ici égale à un sixième de la période électrique $T_\theta$. On note $T_{60}$ la durée de chacune de ces plages de commande $P_1$ à $P_6$.

En variante, le nombre de plages de commande est différent. Les plages de commande peuvent être associées à des intervalles de positions angulaires différents, par exemple de 120° ou de 180°.

L'unité 8 est configurée pour que, pendant chaque plage de commande $P_1$ à $P_6$, le générateur 52 délivre des signaux de commande $S_u$, $S_v$, $S_w$ tels que :

- pour l'un de ces trois signaux de commande $S_u$, $S_v$, $S_w$, le rapport de cyclique de modulation reste constant pendant la durée de cette plage de commande ;
- pour les deux autres signaux de commande $S_v$, $S_w$ ; $S_w$, $S_u$ ; $S_u$, $S_v$, leurs rapports cycliques de modulation respectifs varient inversement l'un par rapport à l'autre.

Ce n'est pas nécessairement toujours le même signal de commande $S_u$, $S_v$, $S_w$ qui a son rapport cyclique de modulation qui reste constant d'une plage de commande $P_1$ à $P_6$ à une autre. Ici, le signal de commande $S_u$, $S_v$, $S_w$ dont le rapport cyclique de modulation reste constant n'est pas le même d'une plage de commande $P_1$ à $P_6$ à une autre.

Pour chaque plage de commande $P_1$ à $P_6$, les rapports cycliques de modulation $R_u$, $R_v$ et $R_w$, lorsqu'ils varient, varient de façon constante, c'est-à-dire que leur dérivée par rapport au temps présente une valeur constante pendant cette plage de commande.

En pratique, ici les rapports cycliques de modulation respectifs des deux autres signaux de commande $S_v$, $S_w$ ; $S_w$, $S_u$ ; $S_u$, $S_v$ varient inversement proportionnellement l'un par rapport à l'autre.

Dans cet exemple, pour chacune de ces plages de commande, les valeurs des rapports cycliques de modulation $R_u$, $R_v$ et $R_w$ sont comprises entre des valeurs maximale $DC_{max}$ et minimale $DC_{min}$. Ici, la valeur maximale $DC_{max}$ est égale à DC et la valeur minimale $DC_{min}$ est égale à 1-DC, où DC est la valeur de référence acquise. De préférence, cette variation de modulation est linéaire en fonction du temps, par exemple avec une pente égale à $\frac{DCmax - DCmin}{n-1}$ en valeur absolue, où « n » représente un nombre entier égal au nombre de périodes du signal de commande $S_u$, $S_v$, $S_w$

pendant la durée des plages de commande pendant lesquelles les valeurs des rapports cycliques de modulation des signaux de commande $S_u$, $S_v$, $S_w$ sont essentiellement continuellement croissantes ou décroissantes, ici de $DC_{min}$ à $DC_{max}$ ou de $DC_{max}$ à $DC_{min}$. Par exemple, on souhaite ici que la variation des rapports cycliques de modulation respectifs des deux signaux de commande $S_v$, $S_w$ ; $S_w$, $S_u$ ; $S_u$, $S_v$ soit telle qu'il faille une durée correspondant à deux plages de commande consécutives pour que ce rapport cyclique de modulation passe continument de la valeur $DC_{min}$ à $DC_{max}$ ou de la valeur $DC_{max}$ à $DC_{min}$. Cette durée correspond donc ici à deux plages de commande consécutives chacune d'une durée de $T_{60}$. Le nombre « n » correspond ainsi à un pas de discrétisation de la variable temps.

En variante, la pente est égale à $\frac{DC - 0,5}{n-1}$ en valeur absolue, où « n » est alors égal au nombre de périodes du signal de commande $S_u$, $S_v$, $S_w$ pendant la durée $T_{60}$ de la plage de commande. Le nombre « n » est dans ce cas égal à T divisé par $T_{60}$.

Pour une fréquence des signaux de commande $S_u$, $S_v$, $S_w$ égale à 18kHz et une fréquence du courant d'alimentation I égale à 100 Hz, le nombre n est égal à soixante.

Dans cet exemple, les variations respectives des rapports cycliques de modulation pour les différents signaux de commande $S_u$, $S_v$, $S_w$ pendant les six plages de commande successives $P_1$ à $P_6$, qui correspondent à une période électrique sont résumées dans le tableau qui suit :

| Plage de commande | $R_U$ | $R_V$ | $R_W$ |
|---|---|---|---|
| $P_1$ | 0,5 + (pvp x k) | $DC_{min}$ | $DC_{max}$ - (pvp x k) |
| $P_2$ | $DC_{max}$ | $DC_{min}$ + (pvp x k) | 0,5 - (pvp x k) |
| $P_3$ | $DC_{max}$ - (pvp x k) | 0,5 + (pvp x k) | $DC_{min}$ |
| $P_4$ | 0,5 - (pvp x k) | $DC_{max}$ | $DC_{min}$ + (pvp x k) |
| $P_5$ | $DC_{min}$ | $DC_{max}$ - (pvp x k) | 0,5 + (pvp x k) |
| $P_6$ | $DC_{min}$ + (pvp x k) | 0,5 - (pvp x k) | $DC_{max}$ |

où : « $DC_{max}$ » est égal à la valeur de référence DC, « $DC_{min}$ » est égal à 1-DC, « k » correspond à la variable temps discrétisée avec le pas de discrétisation « n », et « pvp » est égal au coefficient $\frac{DCmax - DCmin}{n-1}$.

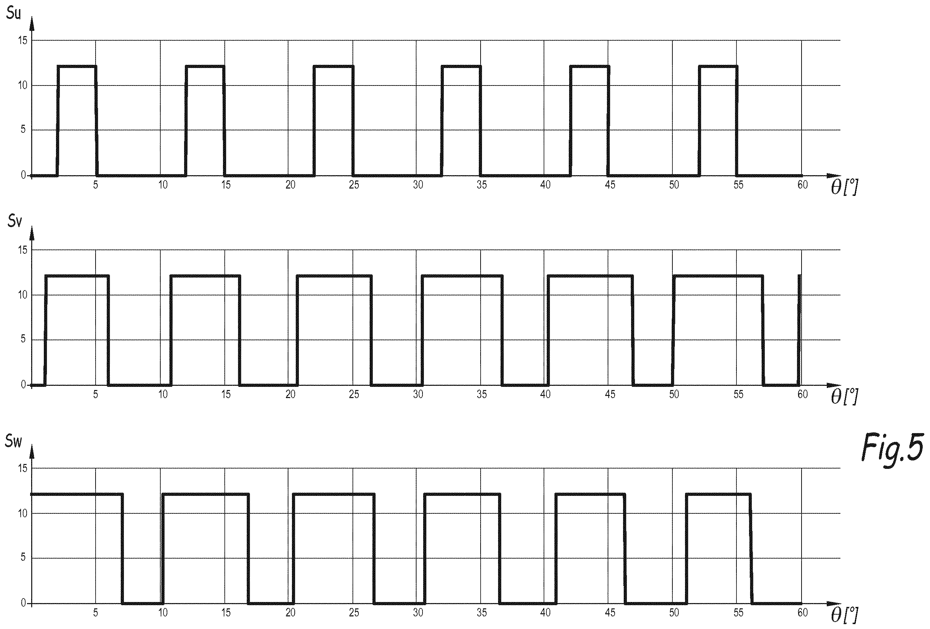

La figure 5 représente l'évolution pour la plage de commande $P_1$ des signaux de commande $S_u$, $S_v$, $S_w$ en fonction de l'angle électrique $\theta$.

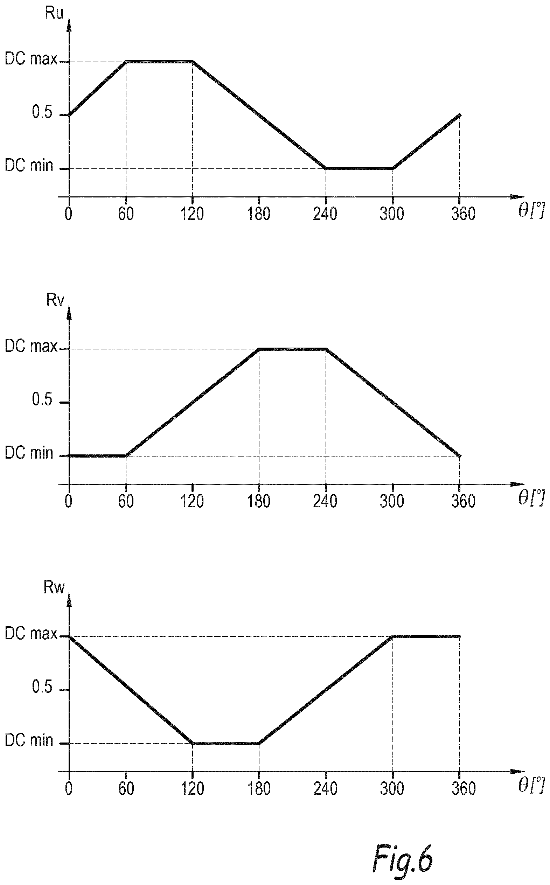

La figure 6 représente l'évolution des rapports cycliques de modulation $R_U$, $R_V$, $R_W$ en fonction de l'angle électrique $\theta$, tels que calculés par l'unité 8, pour un sens de rotation donné du moteur 4.

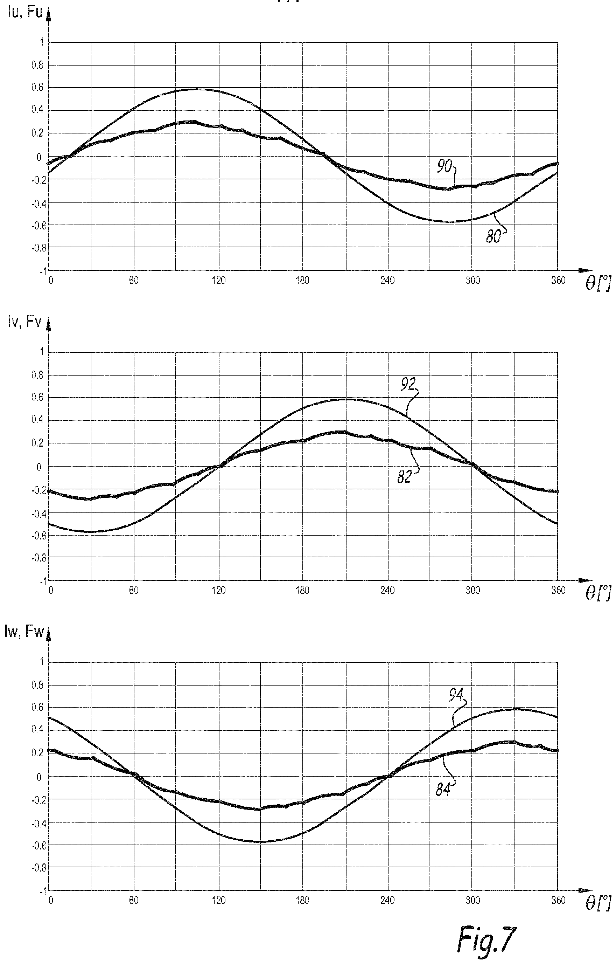

La figure 7 représente l'évolution, en fonction de l'angle électrique $\theta$, du courant d'alimentation I, généré par le convertisseur 6 à partir des signaux de commande $S_u$, $S_v$, $S_w$ et injectés respectivement dans les enroulements 14, 16, 18. Ces courants d'alimentation injectés sont respectivement notés $I_u$, $I_v$ et $I_w$ Les courbes 80, 82 et 84 représentent l'évolution théorique de ces courants traversant les enroulements 14, 16 et 18. Les courbes 90, 92 et 94 représentent respectivement l'évolution de la force contre électromotrice associée à chacun des enroulements 14, 16, 18. La force contre-électromotrice associée aux enroulements 14, 16 et 18 est respectivement notée $F_u$, $F_v$ et $F_w$. Les forces contre-électromotrices $F_u$, $F_v$ et $F_w$ sont des tensions aux bornes, respectivement, des enroulements 14, 16 et 18.

Pour simplifier, sur les figures 5 à 7, l'axe des temps en abscisses est exprimé en fonction de l'angle électrique $\theta$. L'angle électrique $\theta$ est ici proportionnel au temps. Pour simplifier les figures, les axes des ordonnées sont exprimés en unités arbitraires.

Ainsi, les signaux de commande $S_u$, $S_v$, $S_w$ suivent l'évolution de la force contre électromotrice respectivement $F_u$, $F_v$ et $F_w$ générée par le moteur 4 lors de son fonctionnement. Cette force contre électromotrice apparait sur la forme de différences de potentiel électrique aux bornes des enroulements 14, 16, 18 deux à deux, en réponse au déplacement du rotor 12.

En générant les signaux de commande $S_u$, $S_v$, $S_w$ de la façon décrite ci-dessus, on obtient un courant de commande I qui présente une forme pseudo-sinusoïdale qui est suffisamment proche d'un courant sinusoïdal idéal, à l'aide d'un simple calculateur électronique 50 sans avoir besoin d'utiliser un processeur dédié de traitement du signal, qui est plus couteux et qui renchérit la complexité d'utilisation et de fabrication de l'unité 8. En outre, en utilisant un courant de commande de forme pseudo-sinusoïdale plutôt qu'une forme en trapèze, on évite de générer un bruit acoustique important pendant le fonctionnement du moteur. En effet, du fait de la forme pseudo-sinusoïdale, les valeurs de courant électrique fournis aux enroulements 14, 16, 18 ne présentent pas des variations aussi abruptes que dans le cas d'un courant de commande en forme de trapèze.

La figure 8 est un ordinogramme d'un procédé de commande pseudo-sinusoïdale du moteur 4 pour générer le courant d'alimentation I. Pour simplifier la figure, le procédé n'est décrit que pour la plage de commande $P_1$ associée à l'intervalle de 0° à 60° de position angulaire du rotor.

Avantageusement, lors d'une étape 100, le module 70 acquiert automatiquement la valeur de référence DC qui correspond à la vitesse de consigne de rotation prédéfinie. Par exemple, la valeur de référence DC est une valeur moyenne calculée pendant une ou plusieurs plages de commande préalable de fonctionnement du moteur. Par exemple, on calcule une valeur moyenne sur un tour ou deux tours complets du rotor 12 précédent.

Ensuite, lors d'une étape 102, le calculateur 50 calcule automatiquement les valeurs numériques que devront prendre les rapports cycliques de modulation pendant la plage de commande. Par exemple, ce calcul est effectué lors de la plage de commande $P_6$ qui précède la plage de commande $P_1$, préalablement au début de la plage de commande $P_1$.

Par exemple, comme on l'a vu précédemment, les rapports cycliques de modulation des signaux de commande $S_u$, $S_v$, $S_w$ varient de la façon suivante, en fonction du temps discrétisé k :

- le rapport de modulation du signal $S_V$ reste constant est égal à la valeur $DC_{min}$,
- le rapport cyclique de modulation du signal de commande $S_U$ suit la loi d'évolution suivante : 0,5 + pvp x k,
- le rapport cyclique de modulation du signal de commande $S_W$ suit la loi d'évolution suivante : $DC_{max}$ - pvp x k.

Dans cet exemple, pour faciliter l'explication, les périodes électriques et la période des signaux de commande sont choisies de telle sorte que le signal de commande ne présente que six périodes pendant chaque période électrique. Ainsi, la quantité n est égale à 6.

Bien entendu, il peut en aller différemment. Par exemple, pour une fréquence électrique moteur à 100 Hz et une fréquence des signaux de commande $S_u$, $S_v$, $S_w$ égale à 18 kHz il y a un nombre n égal à 30 périodes du signal de commande pendant chaque période électrique.

En prenant la valeur de référence DC égale à 0,7, les rapports cycliques de modulation présentent les valeurs suivantes indiquées dans le tableau ci-dessous.

| n | 1 | 2 | 3 | 4 | 5 | 6 |
|---|---|---|---|---|---|---|
| Rapport cyclique pour $I_v$ | 0,30 | 0,30 | 0,30 | 0,30 | 0,30 | 0,30 |
| Rapport cyclique pour $I_u$ | 0,50 | 0,54 | 0,58 | 0,62 | 0,68 | 0,70 |
| Rapport cyclique pour Iw | 0,70 | 0,66 | 0,62 | 0,58 | 0,54 | 0,50 |

Enfin, lors d'une étape 104, le calculateur électronique 50 transmet au générateur 52 les valeurs calculées des rapports cycliques de modulation. Le générateur 52 génère alors les signaux de commande $S_u$, $S_v$, $S_w$ à partir des valeurs calculées, et applique ces signaux de commande sur le convertisseur 6 de manière à générer le courant d'alimentation I. Par exemple, cette génération débute à partir de l'instant où la position angulaire du rotor 12, tel que déterminée à l'aide du dispositif 30, entre à l'intérieur de l'intervalle de position angulaire correspondant à cette plage de commande.

Le courant d'alimentation I est alors généré par le convertisseur 6 lors d'une étape 106.

Pour simplifier la description, dans ce qui précède, on suppose que la rotation du rotor 12 est constante.

En pratique, il peut toutefois exister un décalage entre la position réelle du rotor 12 et la position attendue de ce rotor, par exemple du fait d'une variation d'un couple résistant exercé par la charge mécanique sur le rotor 12, et qui engendre une variation de vitesse du rotor. Pour assurer un bon fonctionnement du moteur 4, il est préférable que ce décalage soit le plus réduit possible. A cet effet, le calculateur 50 est avantageusement programmé pour synchroniser automatiquement le déclenchement des plages de commande par rapport à la position angulaire du rotor 12. Cela permet d'éviter des transitions trop abruptes entre les plages de commande consécutives.

Par exemple, le calculateur 50 est avantageusement configuré pour resynchroniser le procédé de commande en cas de retard du rotor 12. Plus précisément, à l'issue de la durée $T_{60}$ de la plage de commande $P_1$ associée à l'intervalle des positions angulaires de 0° à 60°, il se peut que le rotor 12 soit à une position angulaire inférieure à 60°, par exemple d'au moins 2° ou d'au moins 5°, par rapport à la position attendue qu'il devrait avoir à la fin de cette plage de commande, c'est-à-dire inférieure ou égale à 60° à moins d'un degré près. Le rotor 12 est alors dit « présenter un retard » par rapport à sa position attendue. Par exemple, à la fin de chaque plage de commande courante, le calculateur 50 détermine automatiquement la position réelle du rotor, par exemple à l'aide du dispositif 30. Si aucun retard n'est déterminé, les signaux de commande $S_u$, $S_v$, $S_w$ prévus pour la plage de commande suivante sont normalement fournis au convertisseur 6.

Si le calculateur 50 détermine que le rotor 12 présente un retard, alors le calculateur 50 commande le générateur 52 pour que les signaux de commande $S_u$, $S_v$, $S_w$ présentent une valeur de rapport cyclique de modulation qui soit égale à celle qu'ils présentaient à la fin de la plage de commande courante. Ces valeurs restent constantes jusqu'à ce que le rotor 12 atteigne la position angulaire attendue, permettant alors à l'unité 8 de fournir au convertisseur 6 des signaux de commandes $S_u$, $S_v$, $S_w$ pour la plage de commande immédiatement suivante.

Par exemple, pour la plage de commande $P_1$, si à l'issue de la durée $T_{60}$ le moteur est dans une position angulaire inférieure à la position attendue, alors l'unité 8 génère les signaux de commande en imposant pour les rapports de cycliques de modulation les valeurs qu'ils présentaient à la fin de la période $T_{60}$, c'est-à-dire :

$$R_U = 0{,}5 + (pvp \times n)$$

$$R_V = DC_{min}$$

$$R_W = DC_{max} - (pvp \times n)$$

Ces valeurs des rapports cycliques de modulation sont maintenues fixes jusqu'à ce que le dispositif 30 détecte que la position angulaire du moteur présente une valeur qui est à l'intérieur de l'intervalle [60°, 120°[ associé à la plage de commande $P_2$. Dans ce cas, les signaux de commande $S_u$, $S_v$, $S_w$ prévus pour cette nouvelle plage de commande sont normalement fournis au convertisseur 6.

De façon analogue, le calculateur 50 est avantageusement configuré pour détecter automatiquement lorsque le rotor 12 est en avance par rapport à sa position attendue. Par exemple, le rotor atteint une position angulaire correspondant à la fin de la plage de commande avant la fin de celle-ci, c'est-à-dire au bout d'une durée inférieure à la durée $T_{60}$ de cette plage de commande. Dans ce cas, l'unité 8 cesse d'appliquer sur le convertisseur 6 les signaux de commande $S_u$, $S_v$, $S_w$ prévus pour cette plage de commande courante et, à la place, applique immédiatement les signaux de commande $S_u$, $S_v$, $S_w$ prévus pour la plage de commande suivante.

En variante, les valeurs de rapport cyclique de modulation $R_u$, $R_v$, $R_w$ sont calculées à l'avance pour plusieurs plages de commande successives. Par exemple, le calculateur 50 calcule automatiquement les valeurs de rapport cyclique de modulation $R_u$, $R_v$, $R_w$ pour les signaux de commande $S_u$, $S_v$, $S_w$ à l'avance pour une séquence de commande comprenant un nombre « m » de plages de commande, où « m » est un nombre entier supérieur à 1. Par exemple, ce calcul est effectué tous les 180° au lieu de les effectuer tous les 60°. Dans ce cas, puisque chaque plage de commande $P_1$ à $P_6$ est associé à un intervalle de positions angulaire de 60°, le nombre « m » est égal à 3. Par exemple, la séquence de commande comprend les plages de commande $P_1$, $P_2$ et $P_3$. De cette manière, on réduit le nombre d'opérations de calcul qu'il est nécessaire d'effectuer. L'actionneur 2 a alors besoin de moins de ressources informatiques pour fonctionner.

Avantageusement, la synchronisation par rapport à la position du rotor 12 peut être effectuée avec une périodicité différente. Par exemple, la resynchronisation a lieu tous les 180° ou bien tous les 360°. Ces valeurs peuvent être adaptées en fonction de la façon dont sont définies les plages de commande.

Selon une autre variante non illustrée, les plages de commande $P_1$ à $P_6$ sont remplacées par des plages de commande $P'_1$, $P'_2$ et $P'_3$ successives, qui sont ici associées respectivement aux intervalles de position angulaire [0° ; 120°[, [120° ; 240°[ et [240° ; 360°[. Pour chacune de ces plages $P'_1$ à $P'_3$, les valeurs des rapports cycliques de modulation $R_u$, $R_v$ et $R_w$ sont comprises entre zéro et DC, où DC est la valeur de référence acquise. Les variations respectives des rapports cycliques de modulation $R_u$, $R_v$ et $R_w$ pour ces plages $P'_1$, $P'_2$ et $P'_3$ sont résumées dans le tableau qui suit :

| Plage de commande | $R_U$ | $R_V$ | $R_W$ |
|---|---|---|---|
| $P'_1$ | pvp' x k | $DC_{max}$ - (pvp' x k) | $DC_{max}$ |
| $P'_2$ | $DC_{max}$ | pvp' x k | $DC_{max}$ - (pvp' x k) |
| $P'_3$ | $DC_{max}$ - (pvp' x k) | $DC_{max}$ | pvp' x k |

où : « $DC_{max}$ » est égal à la valeur de référence DC, « $DC_{min}$ » est égal à zéro, « pvp' » est égal au coefficient $\frac{DCmax - DCmin}{n' - 1}$, dans lequel « n' » représente un nombre entier égal au nombre de périodes du signal de commande

$S_u$, $S_v$, $S_w$ pendant la durée de $T_{120}$ de la plage de commande pendant laquelle les premiers signaux et les deuxièmes signaux sont continuellement croissants ou décroissants et « k » la variable temps discrétisée précédemment écrite. Mis à part ces différences, tout ce qui a été décrit précédemment en référence aux plages de commande $P_1$ à $P_6$ s'applique ici.

**Revendications**

1. Procédé de commande pseudo-sinusoïdale d'un moteur électrique synchrone, ce procédé comportant des étapes de :

    a) génération (104) de trois signaux de commande ($S_U$, $S_V$, $S_W$) comportant chacun une pluralité d'impulsions,
    b) génération (106) de courants électriques d'alimentation pour alimenter un moteur électrique synchrone (4), chacun alimentant un enroulement (14 , 16, 18) du moteur et étant généré par modulation de largeur d'impulsion à partir de celui des signaux de commande qui est associé à cet enroulement,

    **caractérisé en ce que**, lors de l'étape a), les trois signaux de commande sont générés pour des plages de commande successives ($P_1$-$P_6$), chaque plage de commande étant associée à un intervalle prédéfini de positions angulaires d'un rotor (12) du moteur,
    et **en ce que** les impulsions des signaux de commande ($S_u$, $S_v$, $S_w$) générés lors de l'étape a) présentent une durée ($\tau$) qui varie pendant les plages de commande successives ($P_1$-$P_6$), et sont telles que, pour chacune des plages de commande ($P_1$, $P_6$), les valeurs des rapports cycliques de modulation ($R_u$, $R_v$, $R_w$) respectifs de premier et deuxième signaux de commande choisis ($S_u$, $S_v$ ; $S_V$, $S_w$ ; $S_w$, $S_u$) pour cette plage de commande parmi les trois signaux de commande générés varient inversement l'un par rapport à l'autre, le troisième signal de commande ($S_w$, $S_u$, $S_v$) présentant un rapport cyclique de modulation de valeur constante, le rapport cyclique de modulation d'un signal de commande étant défini comme étant égal à la durée ($\tau$, $\tau'$) d'une impulsion du signal de commande divisée par la période (T) de ce signal de commande.

2. Procédé selon la revendication 1, **caractérisé en ce que** :

    - l'étape a) comporte l'acquisition (100) d'une valeur de référence (DC) du rapport cyclique de modulation, qui est définie en fonction d'une vitesse de consigne de rotation du moteur (4) prédéfinie ;
    - lors de l'étape a) les signaux de commande sont générés (104) en fonction de la valeur de référence acquise.

3. Procédé selon la revendication 2, **caractérisé en ce que** la valeur de référence acquise du rapport cyclique de modulation est générée par un régulateur de vitesse (70) du moteur, programmé pour maintenir la vitesse de rotation du moteur à la vitesse de consigne de rotation prédéfinie.

4. Procédé selon l'une des revendications 2 ou 3, **caractérisé en ce que** pour chacune des plages de commande ($P_1$-$P_6$), les valeurs des rapports cycliques de modulation ($R_u$, $R_v$, $R_w$) sont comprises entre les valeurs DC et 1-DC, où DC est la valeur de référence acquise.

5. Procédé selon l'une des revendications 2 à 4, **caractérisé en ce que** pendant chacune des plages de commande, les valeurs des rapports cycliques de modulation ($R_u$, $R_v$, $R_w$) des premier et deuxième signaux ($S_u$, $S_v$ ; $S_v$, $S_w$ ; $S_w$, $S_u$) de commande varient linéairement en fonction du temps.

6. Procédé selon la revendication 5, **caractérisé en ce que** pendant chacune des plages de commande, les valeurs des rapports cycliques de modulation ($R_u$, $R_v$, $R_w$) des premier et deuxième signaux de commande ($S_u$, $S_v$ ; $S_v$, $S_w$ ; $S_w$, $S_u$) varient proportionnellement et inversement l'un par rapport à l'autre avec une pente égale à

    $\dfrac{DCmax-DCmin}{n-1}$ en valeur absolue, où :

    - $DC_{max}$ et $DC_{min}$ sont, respectivement, les valeurs maximale et minimale entre lesquelles varient les valeurs des rapports cycliques de modulation des premier et deuxième signaux de commande ($S_u$, $S_v$ ; $S_v$, $S_w$ ; $S_w$, $S_u$),
    - n est un nombre entier égal au nombre de périodes du signal de commande pendant la durée ($T_{60}$, $T_{120}$) de la plage de commande ou des plages de commande pendant lesquelles les valeurs des rapports cycliques de modulation des premier et deuxième signaux de commande sont essentiellement continuellement croissantes ou décroissantes.

**7.** Procédé selon l'une des revendications précédentes, **caractérisé en ce que** l'étape a) comporte, pendant une plage de commande ($P_1$), dite plage courante :

    - le calcul d'une séquence de commande des valeurs des rapports cycliques de modulation pour au moins la plage de commande suivante ($P_2$),
    - la mesure d'une position angulaire ($\theta$ du rotor du moteur,
    - la génération (104) des signaux de commande ($S_u$, $S_v$, $S_w$) pour la plage de commande ($P_2$) suivante en fonction de la séquence de commande calculée, cette génération étant déclenchée dès que la position mesurée du rotor (12) appartient à l'intervalle prédéfini de positions angulaires associé à la plage de commande suivante ($P_2$).

**8.** Procédé selon la revendication 7, **caractérisé en ce que** l'étape a) comporte la génération des signaux de commande ($S_u$, $S_v$, $S_w$) avec des valeurs de rapports cycliques de modulation ($R_u$, $R_v$, $R_w$) constantes égales, pour chaque signal de commande ($S_u$, $S_v$, $S_w$), à la valeur du rapport cyclique de modulation de ce signal de commande à la fin de la plage de commande courante ($P_1$), uniquement si à l'issue de la plage de commande courante ($P_1$) la position mesurée du rotor (12) n'appartient pas encore à l'intervalle associé à la plage de commande suivante ($P_2$), la génération des signaux de commande ($S_u$, $S_v$, $S_w$) pour la plage de commande suivante en fonction de la séquence de commande calculée n'étant alors déclenchée que lorsque la position mesurée du rotor (12) appartient à l'intervalle prédéfini associé à cette plage de commande suivante ($P_2$).

**9.** Unité (8) de commande pseudo-sinusoïdale d'un moteur électrique synchrone (4), programmé pour :

    a) générer trois signaux de commande ($S_u$, $S_v$, $S_w$) comportant chacun une pluralité d'impulsions,
    b) générer des courants électriques d'alimentation pour alimenter un moteur électrique synchrone (4), chaque phase (U, V, W) du courant d'alimentation alimentant un enroulement (14, 16, 18) du moteur et étant générée par modulation de largeur d'impulsion à partir de celui des signaux de commande qui est associé à cet enroulement,

**caractérisé en ce que** l'unité de commande est configurée pour que les impulsions des signaux de commande ($S_u$, $S_v$, $S_w$) générés lors de l'étape a) présentent une durée ($\tau$) qui varie pendant les plages de commande successives ($P_1$-$P_6$), telles que, pour chacune des plages de commande ($P_1$, $P_6$), les valeurs des rapports cycliques de modulation respectifs de premier et deuxième signaux de commande ($S_u$, $S_v$ ; $S_v$, $S_w$ ; $S_w$, $S_u$) choisis pour cette plage de commande parmi les trois signaux de commande générés varient inversement l'un par rapport à l'autre, le troisième signal de commande ($S_w$, $S_u$, $S_v$) présentant un rapport cyclique de modulation de valeur constante, le rapport cyclique de modulation d'un signal de commande étant défini comme étant égal à la durée ($\tau$, $\tau'$) d'une impulsion du signal de commande divisée par la période (T) de ce signal de commande.

**Patentansprüche**

**1.** Verfahren für eine pseudosinusförmige Steuerung eines Synchron-Elektromotors, wobei das Verfahren die folgenden Schritte umfasst:

    a) Erzeugen (104) von drei Steuersignalen ($S_u$, $S_v$, $S_w$), die jeweils mehrere Impulse enthalten, und
    b) Erzeugen (106) elektrischer Versorgungsströme zum Versorgen eines Synchron-Elektromotors (4), wovon jeder eine Wicklung (14, 16, 18) des Motors versorgt und durch Impulsbreitenmodulation anhand jenes der Steuersignale, das dieser Wicklung zugeordnet ist, erzeugt wird,

**dadurch gekennzeichnet, dass** im Schritt a) die drei Steuersignale für aufeinander folgende Steuerbereiche ($P_1$-$P_6$) erzeugt werden, wobei jeder Steuerbereich einem im Voraus definierten Intervall von Winkelpositionen eines Rotors (12) des Motors zugeordnet ist, und dass die Impulse der Steuersignale ($S_u$, $S_v$, $S_w$), die im Schritt a) erzeugt werden, eine Dauer ($\tau$) besitzen, die sich während der aufeinander folgenden Steuerbereiche ($P_1$-$P_6$) ändern und so beschaffen sind, dass sich in jedem der Steuerbereiche ($P_1$, $P_6$) die Werte der jeweiligen Modulationstastverhältnisse ($R_u$, $R_v$, $R_w$) des ersten und des zweiten gewählten Steuersignals ($S_u$, $S_v$; $S_v$, $S_w$; $S_w$, $S_u$) für diesen Steuerbereich unter den drei erzeugten Steuersignalen entgegengesetzt zueinander verändern, wobei das dritte Steuersignal ($S_w$, $S_u$, $S_v$) ein Modulationstast-

verhältnis mit konstantem Wert besitzt, wobei das Modulationstastverhältnis eines Steuersignals als die Dauer ($\tau$, $\tau$') eines Impulses des Steuersignals dividiert durch die Periode (T) dieses Steuersignals definiert ist.

2. Verfahren nach Anspruch 1, **dadurch gekennzeichnet, dass**

- der Schritt a) das Erfassen (100) eines Referenzwertes (DC) des Modulationstastverhältnisses, der als Funktion einer im Voraus definierten Soll-Drehgeschwindigkeit des Motors (4) definiert ist, umfasst,
- im Schritt a) die Steuersignale (104) als Funktion des erfassten Referenzwertes erzeugt werden.

3. Verfahren nach Anspruch 2, **dadurch gekennzeichnet, dass** der erfasste Referenzwert des Modulationstastverhältnisses durch einen Geschwindigkeitsregulierer (70) des Motors, der so programmiert ist, dass die Drehgeschwindigkeit des Motors auf der im Voraus definierten Soll-Drehgeschwindigkeit gehalten wird, erzeugt wird.

4. Verfahren nach einem der Ansprüche 2 oder 3, **dadurch gekennzeichnet, dass** für jeden der Steuerbereiche ($P_1$-$P_6$) die Werte der Modulationstastverhältnisse ($R_u$, $R_v$, $R_w$) zwischen den Werten DC und 1 - DC liegen, wobei DC der erfasste Referenzwert ist.

5. Verfahren nach einem der Ansprüche 2 bis 4, **dadurch gekennzeichnet, dass** sich während jedes der Steuerbereiche die Werte der Modulationstastverhältnisse ($R_u$, $R_v$, $R_w$) des ersten und des zweiten Steuersignals in Abhängigkeit von der Zeit linear ändern.

6. Verfahren nach Anspruch 5, **dadurch gekennzeichnet, dass** sich während jedes der Steuerbereiche die Werte ($R_u$, $R_v$, $R_w$) der Modulationstastverhältnisse des ersten und des zweiten Steuersignals ($S_u$, $S_v$; $S_v$, $S_w$; $S_w$, $S_u$) proportional und entgegengesetzt zueinander mit einer Steigung ändern, die dem Absolutwert nach gleich ($DC_{max}$ - $DC_{min}$)/(n - 1) ist, wobei:

- $DC_{max}$ und $DC_{min}$ der Maximalwert bzw. der Minimalwert sind, zwischen denen sich die Werte der Modulationstastverhältnisse des ersten und des zweiten Steuersignals ($S_u$, $S_v$; $S_v$, $S_w$; $S_w$, $S_u$) ändern,
- n eine ganze Zahl ist, die gleich der Anzahl der Perioden des Steuersignals während der Dauer ($T_{60}$, $T_{120}$) des Steuerbereichs oder der Steuerbereiche ist, während derer die Werte der Modulationstastverhältnisse des ersten und des zweiten Steuersignals im Wesentlichen ununterbrochen zunehmen oder abnehmen.

7. Verfahren nach einem der vorhergehenden Ansprüche, **dadurch gekennzeichnet, dass** der Schritt a) während eines Steuerbereichs ($P_1$), der aktueller Bereich genannt wird, Folgendes umfasst:

- Berechnen einer Steuerfolge der Werte von Modulationstastverhältnissen wenigstens für den folgenden Steuerbereich ($P_2$),
- Messen einer Winkelposition ($\theta$) des Rotors des Motors,
- Erzeugen (104) der Steuersignale ($S_u$, $S_v$, $S_w$) für den folgenden Steuerbereich ($P_2$) als Funktion der berechneten Steuerfolge, wobei dieses Erzeugen ausgelöst wird, sobald die gemessene Position des Rotors (12) in dem im Voraus definierten Intervall von Winkelpositionen liegt, das dem folgenden Steuerbereich ($P_2$) zugeordnet ist.

8. Verfahren nach Anspruch 7, **dadurch gekennzeichnet, dass** der Schritt a) das Erzeugen von Steuersignalen ($S_u$, $S_v$, $S_w$) mit konstanten Werten der Modulationstastverhältnisse, die für jedes Steuersignal ($S_u$, $S_v$, $S_w$) gleich dem Wert des Modulationstastverhältnisses dieses Steuersignals am Ende des aktuellen Steuerbereichs ($P_1$) sind, ausschließlich dann umfasst, wenn am Ende des aktuellen Steuerbereichs ($P_1$) die gemessene Position des Rotors (12) noch nicht zu dem dem folgenden Steuerbereich ($P_2$) zugeordneten Intervall gehört, wobei das Erzeugen der Steuersignale ($S_u$, $S_v$, $S_w$) für den folgenden Steuerbereich als Funktion der berechneten Steuerfolge nur dann ausgelöst wird, wenn die gemessene Position des Rotors (12) dem diesem folgenden Steuerbereich ($P_2$) zugeordneten und im Voraus definierten Intervall gehört.

9. Einheit (8) für eine pseudosinusförmige Steuerung eines Synchron-Elektromotors (4), die programmiert ist zum:

a) Erzeugen von drei Steuersignalen ($S_u$, $S_v$, $S_w$), die jeweils mehrere Impulse enthalten, und
b) Erzeugen elektrischer Versorgungsströme zum Versorgen eines Synchron-Elektromotors (4), wobei jede Phase (U, V, W) des Versorgungsstroms eine Wicklung (14, 16, 18) des Motors versorgt und durch Impulsbreitenmodulation anhand jenes der Steuersignale, das dieser Wicklung zugeordnet ist, erzeugt wird,

**dadurch gekennzeichnet, dass** die Steuereinheit so konfiguriert ist, dass die Impulse der Steuersignale ($S_u$, $S_v$, $S_w$), die im Schritt a) erzeugt werden, eine Dauer ($\tau$) besitzen, die sich während der aufeinander folgenden Steuerbereiche ($P_1$-$P_6$) in der Weise ändert, dass sich für jeden der Steuerbereich ($P_1$, $P_6$) die Werte der jeweiligen Modulationstastverhältnisse des ersten und des zweiten gewählten Steuersignals ($S_u$, $S_v$; $S_v$, $S_w$; $S_w$, $S_u$) für diesen Steuerbereich unter den drei erzeugten Steuersignalen entgegengesetzt zueinander ändern, wobei das dritte Steuersignal ($S_w$, $S_u$, $S_v$) ein Modulationstastverhältnis mit konstantem Wert besitzt, wobei das Modulationstastverhältnis eines Steuersignals gleich der Dauer ($\tau$, $\tau'$) eines Impulses des Steuersignals dividiert durch die Periode (T) dieses Steuersignals definiert ist.

## Claims

1. Pseudo-sinusoidal control method for a synchronous electric motor, this method comprising steps of:

   a) generating (104) three control signals ($S_U$, $S_V$, $S_W$) each having a plurality of pulses,
   b) generating (106) electric supply currents for supplying a synchronous electric motor (4), each supplying a winding (14, 16, 18) of the motor and being generated by pulse-width modulation starting from the control signal that is associated with that winding,

   **characterised in that**, in step a), the three control signals are generated for successive control ranges ($P_1$-$P_6$), each control range being associated with a predefined range of angular positions of a rotor (12) of the motor, and **in that** the pulses of the control signals ($S_u$, $S_v$, $S_w$) generated in step a) have a duration ($\tau$) which varies during the successive control ranges ($P_1$-$P_6$) and are such that, for each of the control ranges ($P_1$, $P_6$), the values of the respective modulation duty cycles ($R_u$, $R_v$, $R_w$) of chosen first and second control signals ($S_u$, $S_v$; $S_v$, $S_w$; $S_w$, $S_u$) for that control range from among the three control signals generated vary inversely relative to one another, the third control signal ($S_w$, $S_u$, $S_v$) having a modulation duty cycle of constant value, the modulation duty cycle of a control signal being defined as being equal to the duration ($\tau$, $\tau'$) of a pulse of the control signal divided by the period (T) of that control signal.

2. Method according to claim 1, **characterised in that**:

   - step a) comprises acquiring (100) a reference value (DC) of the modulation duty cycle, which is defined as a function of a predefined nominal rotational speed of the motor (4);
   - in step a), the control signals are generated (104) as a function of the acquired reference value.

3. Method according to claim 2, **characterised in that** the acquired reference value of the modulation duty cycle is generated by a speed regulator (70) of the motor, which speed regulator is programmed to maintain the rotational speed of the motor at the predefined nominal rotational speed.

4. Method according to either claim 2 or claim 3, **characterised in that**, for each of the control ranges ($P_1$-$P_6$), the values of the modulation duty cycles ($R_u$, $R_v$, $R_w$) are between the values DC and 1-DC, where DC is the acquired reference value.

5. Method according to any one of claims 2 to 4, **characterised in that**, during each of the control ranges, the values of the modulation duty cycles ($R_u$, $R_v$, $R_w$) of the first and second control signals ($S_u$, $S_v$; $S_v$, $S_w$; $S_w$, $S_u$) vary linearly as a function of time.

6. Method according to claim 5, **characterised in that**, during each of the control ranges, the values of the modulation duty cycles ($R_u$, $R_v$, $R_w$) of the first and second control signals ($S_u$, $S_v$; $S_v$, $S_w$; $S_w$, $S_u$) vary proportionally and

   inversely relative to one another with a ratio equal to $\frac{DCmax - DCmin}{n-1}$ in absolute terms, where:

   - $DC_{max}$ and $DC_{min}$ are, respectively, the maximum and minimum values between which the values of the modulation duty cycles of the first and second control signals ($S_u$, $S_v$; $S_v$, $S_w$; $S_w$, $S_u$) vary,
   - n is an integer equal to the number of periods of the control signal during the duration ($T_{60}$, $T_{120}$) of the control range or of the control ranges during which the values of the modulation duty cycles of the first and second control signals are substantially continuously increasing or decreasing.

7. Method according to any one of the preceding claims, **characterised in that** step a) comprises, during a control range ($P_1$), called the current range:

  - calculating a control sequence of the values of the modulation duty cycles for at least the following control range ($P_2$),
  - measuring an angular position ($\theta$) of the rotor of the motor,
  - generating (104) the control signals ($S_u$, $S_v$, $S_w$) for the following control range ($P_2$) as a function of the calculated control sequence, this generation being triggered as soon as the measured position of the rotor (12) belongs to the predefined range of angular positions associated with the following control range ($P_2$).

8. Method according to claim 7, **characterised in that** step a) comprises generating the control signals ($S_u$, $S_v$, $S_w$) with constant values of modulation duty cycles ($R_u$, $R_v$, $R_w$) which are equal, for each control signal ($S_u$, $S_v$, $S_w$), to the value of the modulation duty cycle of that control signal at the end of the current control range ($P_1$), only if, at the end of the current control range ($P_1$), the measured position of the rotor (12) still does not belong to the range associated with the following control range ($P_2$), the generation of the control signals ($S_u$, $S_v$, $S_w$) for the following control range as a function of the calculated control sequence then being triggered only when the measured position of the rotor (12) belongs to the predefined range associated with that following control range ($P_2$).

9. Pseudo-sinusoidal control unit (8) of a synchronous electric motor (4), programmed to:

  a) generate three control signals ($S_u$, $S_v$, $S_w$) each having a plurality of pulses,
  b) generate electric supply currents for supplying a synchronous electric motor (4), each phase (U, V, W) of the supply current supplying a winding (14, 16, 18) of the motor and being generated by pulse-width modulation starting from the control signal that is associated with that winding,

  **characterised in that** the control unit is configured so that the pulses of the control signals ($S_u$, $S_v$, $S_w$) generated in step a) have a duration ($\tau$) which varies during the successive control ranges ($P_1$-$P_6$), such that, for each of the control ranges ($P_1$, $P_6$), the values of the respective modulation duty cycles of first and second control signals ($S_u$, $S_v$; $S_v$, $S_w$; $S_w$, $S_u$) chosen for that control range from among the three control signals generated vary inversely relative to one another, the third control signal ($S_w$, $S_u$, $S_v$) having a modulation duty cycle of constant value, the modulation duty cycle of a control signal being defined as being equal to the duration ($\tau$, $\tau'$) of a pulse of the control signal divided by the period (T) of that control signal.

Fig.1

EP 3 394 978 B1

Fig.2

Fig.3

EP 3 394 978 B1

Fig.4

Fig.8

Fig.5

Fig.6

Fig.7

21

**EP 3 394 978 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040056632 A1

- US 5804939 A